# EUROPEAN PATENT SPECIFICATION

(11) **EP 3 305 521 B1**
(45) Date of publication and mention of the grant of the patent: **15.05.2019**
(21) Application number: 16192563.1
(22) Date of filing: 06.10.2016
(51) Int. Cl.: B32B 9/02, B32B 9/04, B32B 7/04, B32B 7/12, B32B 21/04, A44C 5/00, A44C 27/00, B65D 6/00

(54) **LAMINATE FROM BIRCH BARK, METHOD FOR PRODUCING THE LAMINATE AND OBJECTS MADE OF THE LAMINATE**
LAMINAT AUS BIRKENRINDE, VERFAHREN ZUR HERSTELLUNG DES LAMINATS UND AUS DEM LAMINAT HERGESTELLTE GEGENSTÄNDE
STRATIFIÉ D'ÉCORCE DE BOULEAU, PROCÉDÉ DE PRODUCTION DU STRATIFIÉ ET OBJETS FABRIQUÉS DANS CE STRATIFIÉ

(43) Date of publication of application: 11.04.2018
(73) Proprietor: Koshcheeva, Anastasiya, 10961 Berlin (DE); Claus, Burghard, 14513 Teltow (DE)
(72) Inventor: Koshcheeva, Anastasiya, 10961 Berlin (DE); Claus, Burghard, 14513 Teltow (DE)
(74) Representative: Schulz Junghans Patentanwälte PartGmbB

(56) References cited:
- CN-Y- 201 280 259
- DE-A1-102008 032 940

## Description

The invention relates to a laminate from birch bark, a method for producing a laminate from birch bark, a bracelet, in particular a watch bracelet, a use of the laminate, an object suitable for the arrangement on human or animal skin, an object suitable for human actuation, particularly for manual actuation, a solid object, in particular a wood panel for the manufacturing of furniture, an object suitable for the arrangement in a humid environment, in particular a shower mat, a receptacle suitable for the retention of objects or goods, in particular a container, a bag, a case or a sheath, and a surface element comprising the laminate.

Since prehistoric times, birch bark has been known as a versatile material. It has been used in a variety of applications making use of its wide range of advantageous material properties. Its naturally light surface is water and dirt repellent. Its structure and composition provides stability and durability at a low weight as well as preserving characteristics and resistance to fungus and bacteria.

However, the industrial use of birch bark is severely limited up to now, as the birch bark consists of natural layers which tend to separate under the influence of exterior stress. Even though pieces of birch bark may be durably joined, e.g. by an adhesive, in order to produce larger units for the manufacturing of a variety of objects, its natural layers cannot provide sufficient and consistent strength.

DE 10 2008 032 940 B4 describes a method for the production of objects from birch bark, wherein the pieces of birch bark are cut in a uniform area, wetted with an adhesive, layered one on top of another, forming a body, and let cure under a defined pressure. Objects are formed from the layered body by mechanical processing.

DE 10 2015 005 379 describes an improvement of the method from DE 10 2008 032 940 B4, wherein a particular formulation of the binder is disclosed in order to reinforce and improve the surfaces formed by the cutting edges.

The problem to be solved by the invention is to provide a laminate from birch bark with increased stability in order to allow for an industrial production of objects from birch bark and a method to produce the laminate as well as different objects comprising the laminate. The problem is solved by the subject matter of the laminate from birch bark as claimed in claim 1 and the method for producing a laminate from birch bark as claimed in claim 4. Advantageous embodiments of the laminate are given in the dependent claims 2 and 3 and advantageous embodiments of the method are given in claims 5-11. Additionally, a bracelet is claimed in claim 12, a use of a laminate is claimed in claim 13, an object suitable for the arrangement on human or animal skin is claimed in claim 14, an object suitable for human actuation is claimed in claim 15, a solid object is claimed in claim 16, an object suitable for the arrangement in a humid environment is claimed in claim 17, a receptacle suitable for the retention of objects or goods is claimed in claim 18 and a surface element is claimed in claim 19.

A first aspect of the invention is a laminate from birch bark, comprising a piece of birch bark having a plurality of layers. In at least one area of the birch bark, layers are fixed to each other by adhesive bond generated by heat introduction.

A laminate is a material comprising multiple layers, wherein the layers can be of the same material or of different materials. Birch bark is a natural product comprising a plurality of naturally laminated layers; in other words birch bark is a natural laminate. A natural bond between the layers is given, but this bond is not sufficient for a further processing as it cannot provide satisfactory stability.

By heat introduction, this bond is increased and thus the laminate can be used for a multitude of purposes. Particularly, heat can be introduced in a targeted way for enhancing the birch bark's stability by enhancing the bond between at least some of the layers.

Particularly, an adhesive bond is obtained due to the release of naturally contained pitch by heat introduction.

A piece of birch bark is particularly a piece with defined dimensions which has been removed from a birch trunk.

In particular, heat introduction means targeted heat introduction. Targeted in this context means that heat introduction is performed in order to generate or increase an adhesive bond for the fixation of birch bark layers. Accidental or random heat introduction is not meant in the context of the invention.

The area of the bark in which layers are fixed to each other is particularly an area visible in top view. Although heat may be introduced in the form of dots, the effective zone of heat introduction is always an area. In particular, the area of the bark where layers are fixed to each other by adhesive bond generated by heat introduction is within the area or surface of the birch bark.

In areas of heat introduction, material may be removed forming recesses in the birch bark. Therefore, the laminate may have a decreased geometrical moment of inertia in these areas, leading to easier deformability which can be used e.g. for bending during further processing. Furthermore, the material can be discolored due to heat introduction, particularly towards a brownish or blackish tone. If heat is introduced only from one side and does not penetrate the laminate, this discoloration typically occurs only on the side of heat introduction.

The border of the respective recess is the zone having increased adhesive bond due to heat introduction.

Due to increased adhesive bond, the laminate according to the invention has an increased stability and can be used in a great variety of applications.

In one embodiment of the laminate, the birch bark originates from Betula Pubescens or Betula Pendula. Said birch species are widespread between 48 and 65 degrees north and particularly suitable due to their bark structure.

In another embodiment of the laminate, the bark layers are fixed to each other by adhesive bond generated by heat introduction in a part of the material thickness, and the thickness of the remaining material is 0.2 to 0.8 mm and in particular 0.3 to 0.5 mm.

In other words, the heat introduction fixes the bonds between the layers only in a part of the overall material thickness and another part without an increased bond remains. This part of the overall thickness has a thickness of e.g. 0.3 mm to 0.5 mm.

The thickness of the increased bond is typically measured in the area with an increased bond from the side of the heat introduction. The thickness of the remaining material in which the natural layers are not bonded by the heat introduction is measured from the side opposite to the side of heat introduction. Typically, the heat introduction is realized from the darker inner side of the birch bark in order to avoid visual impairing of the light outer side which is usually desired as a surface due to its aesthetic appearance.

On the one hand, this embodiment ensures that the increased bond is present in a wide range of the material thickness, providing a great material strength. On the other hand, particularly when heat is introduced into the inner side of the birch bark, a certain distance is provided to safely prevent the heat from affecting the undisturbed surface of the laminate. The described dimensions pose an optimally balanced range of both effects.

A second aspect of the invention is a method for producing a laminate from birch bark, wherein a piece of birch bark is provided, comprising a plurality of layers. Heat is introduced into the piece of birch bark in order to increase the bond between at least some of the layers.

Heat is introduced at least zonally and at least from one side. Particularly, the heat is introduced in focused way into at least one of the sides and into the area of one surface of the piece of birch bark. Alternatively, the piece of birch bark may be heated in its entirety.

This leads to an enhanced stability of the laminate in comparison to the raw material. Introduced heat of a defined temperature releases the contained pitch and leads to a bonding of the layers due to its adhesive properties, in particular along the edges of the heat application zones. The layers are fixed and stabilized in these zones and a separation of single natural layers e.g. due to external stress is prevented. Particularly, the method is suitable for the manufacturing of a laminate according to the invention.

Prior to heat introduction, the raw material, birch bark, is removed from the trunk, particularly in large pieces, and stored under defined pressure, temperature and humidity conditions. Pressure is introduced particularly in order to prevent naturally occurring curling of the birch bark pieces. Outer layers, e.g. white layers, may be mechanically treated and/or removed to obtain a homogenous and resilient surface out of one continuous birch bark layer and/or to adjust the desired material thickness. For these reasons, also inner layers may be removed. For many applications, such as the production of watch bracelets, the material thickness may be approximately 1 mm.

In one embodiment of the method for producing a laminate from birch bark the piece of birch bark is heated to a temperature of 200 to 400 °C, in particular 240 to 320 °C, in the zone of heat introduction.

In one embodiment, the temperature may be between 254 °C and 310 °C. At these temperatures the birch bark has proven to reliably release sufficient amounts of the contained pitch in order to manufacture a stable laminate. At too high temperatures, the material may be carbonized or ignited.

The heat may be introduced by means of a laser.

The laser may move with a velocity of 1000-1800 mm/s, e.g. approx. 1400 mm/s, with respect to the birch bark, while delivering an electrical power of 40-90 Watts.

Typically, a laser is used to introduce heat into one side of the birch bark in a focused and defined way. Typically, the color changes to a darker tone in the areas where the laser is applied. A laser is suitable to introduce defined amounts of energy under controlled and reproducible conditions. Further advantages are its rapid, easy and cost-efficient operation. Particularly, the laser introduces heat on the darker inner side of the birch bark. The heat may remove material, forming recesses in the birch bark surface. In the zones adjacent to recesses, regions of increased adhesive bond are formed. The remaining material thickness, measured from the white outer side to the deepest point of the recess may be between 0.5 mm and 1.1 mm. The remaining thickness of material unaffected by the laser, measured from the white outer side to the beginning of the adhesive bond, i.e. to the first layer of birch bark in which the bond is increased due to heat introduction, is between 0.2 mm and 0.8 mm and in particular between 0.3 mm and 0.5 mm, as described.

Alternatively, the heat may be applied with a hot tool, particularly in combination with pressure. A hot tool, e.g. a hot stamp, may be pressed onto the birch bark in order to apply pressure and heat simultaneously and thereby increase the bond between at least some of the natural birch bark layers. The stamp may be arbitrarily shaped to provide dots, lines or patterns of heat application.

In another embodiment of the method for producing a laminate the piece of birch bark comprises an inner side and an outer side and the heat is applied to the inner side.

The outer side is the white side which is typical for birch bark and faces outside on the trunk of a birch tree. It is typically desired as surface of objects due to its aesthetic appearance, as described. Furthermore, it may be chosen due to its desirable health, stability and water-repellent properties. Therefore, heat introduction which may cause discoloration is performed particularly on the inner side.

The heat may partially penetrate the piece of birch bark.

In particular, the heat is applied in a way that it penetrates the birch bark to a large extent but not entirely. Experiments have shown that the resulting stability is very high due to the bonding of the natural birch bark layers even if the heat, in particular when applied to the inner side by a laser, does not lead to a visible change in color on the outer side. However, during the process, an increase of the temperature may also be measurable on the outer side. Even a slightly increased bond may be achieved on the outer side. In particular, the high temperatures which are responsible for the change in color do not penetrate the piece of birch bark and, thus, do not lead to a discoloration of the outer side.

The heat may be applied in dots and/or in lines.

In particular, the heat is applied in a predefined pattern. The pattern may be regular, partly regular or irregular and it may comprise dots, lines and arbitrarily-shaped areas. Besides its technical effect in bonding the birch bark layers it may serve as an aesthetic design element. Even if a laser beam with a very small diameter, e.g. between 0.01 mm and 0.5 mm, in particular between 0.02 mm and 0.2 mm, is used, it can be moved in the shape of dots, lines and arbitrary-shaped areas in order to achieve macroscopically visible patterns.

In particular, the relation between the width Wh of the dot or line of heat introduction and the width Wr of adjacent material not bonded by introduced heat is Wh/Wr = 1/1 to 1/30 wherein the widths are to be measured in the same direction and particularly in top view. This has proven to be an optimal range between the effort of heat introduction and the achievable stability. For different applications, the relation between Wh and Wr may be adapted.

In some embodiments, the width of the heat introduction is less than 2 mm.

In one embodiment, a first piece of birch bark comprises at least one zone with an adhesive bond between at least some of the layers. This piece of birch bark is bonded to a body, particularly to a second piece of birch bark, by means of a binder.

That is, the laminate according to the invention is bonded to a body, particularly to a second piece of birch bark. The second piece of birch bark may also comprise at least one area with an increased bond between at least some of the layers which has been manufactured according to the invention.

The body may be an arbitrary body with a surface onto which a laminate is to be bonded. This may be performed in order to increase the stability and/or durability and/or to modify the surface properties and/or the aesthetic appearance of the body and/or the piece of birch bark. The body may comprise a surface of a planar material, e.g. textiles, leather, rubber, natural rubber, fleece, woven, knitted or crocheted fabrics, fibers, veneer, wood, stone, metal or sheet metal onto which the piece of birch bark may be bonded. The bonding may be realized in parts of the birch bark surface or on the entire surface. Multiple birch bark layers may be combined.

The binder may particularly be an adhesive. For example, it may be a dispersion glue comprising polyvinyl acetate, an epoxy based glue, a contact adhesive comprising rubber or synthetic compounds such as neoprene, a hot-melt adhesive, e.g. based on ethylene-vinyl acetate, polyamide or polyurethane, a melamine resin or a polyurethane adhesive. Alternatively, it may be based on phenol-formaldehyde, urea-formaldehyde or resorcinol formaldehyde resin.

It may contain dust from birch bark. At least one layer of binder is applied.

Particularly, a first surface of the first piece of birch bark is at least partially covered with a binder and the second piece of birch bark is positioned on the first piece of birch bark with its first surface facing the first surface of the first piece of birch bark. In particular, at least one of the first surfaces is an inner side. A laminate is formed by bonding the first and the second pieces of birch bark by means of the binder. In particular, both surfaces are inner sides. Thus, the bonding is realized in a way that both sides of the obtained laminate are formed by outer sides of birch bark.

As the inner and outer sides of the birch bark have different material properties such as densities or surface tensions, individual birch bark layers tend to deform due to environmental influences such as humidity, temperature and time, e.g. by curling. Through combining the two parts in opposite directions as described, the deforming forces are balanced out and the deformation can be efficiently prevented.

The layers of the first and second laminate are particularly bonded with their main grain directions running parallel in order to effectively compensate any possible deforming forces. However, the grain directions may alternatively be arranged in an arbitrary angle, e.g. in 90 degree angles to increase the stability in compounds with more layers. A great number of laminates may be bonded with the method according to the invention in order to obtain thick laminates or three dimensional structures from birch bark. Said structures can be processed or machined in any way to manufacture arbitrary objects or intermediate products from birch bark, having a number of advantageous material properties such as light weight, high mechanical stability, high durability, water and dirt repellent properties and many more.

Bonding in this context means an adhesion due to the binder, e.g. the adhesive. This adhesion may be promoted and/or realized by inputting energy, e.g. thermal energy, and/or by applying pressure.

A multitude of laminates or birch bark pieces may be bonded in a staggered manner and without overlapping joints. In this way, large planar laminates may be produced.

In one embodiment of the method producing a laminate from birch bark, the first piece of birch bark is pressed onto the surface with a pressure p between 3 kPa and 5 kPa, particularly between 4 kPa and 4.5 kPa.

Particularly, a pressure is applied by pressing the laminate layers together with a force. The force may be predefined or e.g. a predefined compression may be realized. The pressure may change during the process and/or pressure profiles may be realized, for example in combination with temperature changes. Pressure and elevated temperatures may be applied simultaneously and/or consecutively; a higher temperature may be realized after pressure exertion. Pressure is exerted particularly on the whole area of the joined laminate or on the whole area of binder application in order to realize a uniform bonding. Typically, the parameters pressure, temperature, duration of pressing, humidity conditions and curing time are defined by the properties of the adhesive. Applying pressure can strengthen the bond, increase the spread of the binder and/or lead to a more consistent bond.

At least one peripheral zone of the first piece of birch bark may be chamfered, leading to an oblique area, wherein during the bonding process the oblique area is directed towards the body.

Particularly, the peripheral zone is an edge of the piece of birch bark. It is chamfered typically prior to the bonding process, leading to an oblique area running from the inner side of the piece of birch bark to the narrow side, i.e. the cut surface. Chamfering may be performed when preparing ends of ribbons, straps or bracelets or other edges and makes the said peripheral zone softer, more flexible and convenient.

One application is the production of bracelets, such as watch bracelets. For example, material is removed from each of two laminates to be bonded. It is removed from one side in an oblique way and within a distance of 20 mm to the edge, obtaining a minimal material thickness of 0.3 mm, before bonding the two laminates. Thus, a smooth and convenient tapering with an increased flexibility is produced instead of a sharp edge which is particularly advantageous for the end of the strap which is to be inserted into the buckle.

After bonding, such as gluing, the bond between the pieces of birch bark laminate can be even increased by sewing. By this step, the pieces are additionally and independently fixed. The seams may also serve an aesthetic purpose.

In one embodiment, the side of the first piece of birch bark into which heat was introduced is used for bonding.

In this way the possibly discolored side is not visible on the product. Alternatively, the discoloration due to heat introduction may be used as a design element and e.g. patterns, pictograms, text or arbitrary content may be achieved by targeted heat introduction. In this case, the discolored surface can be arranged visibly.

In combination with the use of the inner side for heat introduction, the white outer side is arranged on the outside of the bonded laminate, constituting at least an optical and/or technical feature.

Recesses may be formed in the piece of birch bark due to the heat application and the binder is applied in such a manner that the recesses are filled by at least 60% and particularly by at least 80% with the binder.

In particular, all recesses are filled essentially or completely with the binder. As the binder compensates the reduced cross-sections in areas of heat application, this leads to an increased stability of the laminate.

In another embodiment of the method for producing a laminate, a pin is positioned on one side of the laminate and the laminate is bent around the pin. Before bending, the laminate may be heated to a temperature of at least 80 °C, preferably more than 90 °C, for instance 100 °C, because the laminate having an elevated temperature is more flexible and can easily be bent.

A pin in the sense of the invention may be any bar-shaped object, particularly a relatively long and thin object. Preferably, its length exceeds the width of the laminate as measured on the position to be bent. It may have an arbitrary and, particularly, a circular cross section.

Also the sides of the bent laminate may be bonded by adhesion to enhance the bond. In addition, sewing of the laminate layers which are lying on top of each other is possible.

The material thickness of the laminate may be partially reduced, e.g. in sections about to overlap after the bending, to obtain an essential constant thickness of the material after bending. E.g. chamfered peripheral zones or edges may be used, as described, to prevent too thick straps after bending and/or bonding and/or sewing. The pin may be removed after bending or bonding or sewing or it remains in its position to serve a predetermined purpose.

The pin does not necessarily have to be positioned directly on the surface of the laminate. For example, an additional layer of an arbitrary material may be arranged, e.g. for adjusting the bending radius or for surface protection.

This step may e.g. be used in order to manufacture a connection area of a strap of a watch bracelet. The pin may remain inside the loop in order to be connected to the body of the watch. Also a frame of a buckle may be connected to the strap in this way.

In one embodiment of the invention, the laminate is cut and heat is applied to at least one cutting edge to increase the bond between the layers.

In particular, the laminate is cut through and, thus, all desired shapes can be produced. Heat can be applied with any suitable method during and/ or after cutting with a conventional or laser cutting method. In particular, cutting and heat application are realized in one step with a laser, simultaneously shaping the laminate and increasing the bond between the layers along the cutting edge by adhesion due to the released pitch. The material is being fixed and stabilized in the areas of the cutting edges and a separation or shift between the layers is prevented. All comprised layers can be bonded in this way. In addition, not only the natural layers of the bark may be bonded, but also can the natural layers be bonded to an additional layer or a plurality of additional layers.

For cutting the laminate and simultaneously bonding the layers, the laser may move with a velocity of 100-250 mm/s, e.g. approx. 160 mm/s, with respect to the birch bark, while delivering an electrical power of 20-40 Watts.

Typically, the cut runs perpendicular to the plane of the birch bark layers. However, in an alternative embodiment, the cut may run in an arbitrary angle.

In particular, the energy input necessary to cut through the entire layer thickness is higher than the energy input for heat introduction to solely increase the bond between the layers.

Through heat application and the multi-layer laminate structure with the defined arrangement of the single layers, flexibility, tensile strength and durability of the birch bark and the manufactured laminates is guaranteed. The bonding of the single layers by binder, pressure and an elevated temperature prevents unintended deformation, separation of single birch bark layers and unintended shifts between the layers.

Further aspects of the invention relate to different possible applications of the laminate. All described applications may be realized with the laminate according to the invention and/or the laminate manufactured with a method according to the invention, which is not always repeated for reasons of clarity. One aspect is a bracelet, in particular a watch bracelet, comprising the laminate according to the invention.

The bracelet can further comprise buckles, locks, seams, or the like as known from common bracelets. It particularly comprises the watch. The sides of the laminate may be bonded by a binder such as an adhesive and a pin may be arranged in the formed loop in order to fix a bucket or the like, or to provide fixation to the watch body. Typically, a laminate comprising two pieces of birch bark with an increased bond is used, wherein the heat introduction has been realized into the inner sides and the pieces are additionally bonded with their outer sides facing outside.

Another aspect is the use of the laminate according to the invention for the production of a bracelet, in particular a watch bracelet.

A further aspect is the use of a laminate for the arrangement on human or animal skin. It can be used for different purposes, in particular for the fixation of clothes or objects, for example in straps for shoes, sandals, hats, bracelets, etc. Also straps for backpacks and belts are possible.

A further aspect of the invention is an object suitable for the arrangement on human or animal skin, characterized in that it comprises the laminate according to the invention.

In particular, the birch bark surface is to be arranged in a manner allowing for direct human skin contact during use as intended, making use of its good grip, even when wet, its durability, its antibacterial, dirt repellent and skin neutral pH properties as well as its unique optical appearance. Possible application examples are as described. However, the object may also be an item not allowing the birch bark laminate to directly contacting the skin, such as a piece of jewelry, like an earring for the arrangement on the skin, wherein the laminate is arranged in a pending or detached way. The object can also be a belt which is typically used with clothing but still suitable for the arrangement on human skin.

Another aspect is an object suitable for human actuation, particularly for manual actuation, characterized in that it comprises the laminate according to the invention.

In particular, the birch bark surface is arranged in a manner allowing for direct human contact such as manual contact during use as intended, making use of its high durability, good grip and unique optical appearance. This means in particular handles of all kinds, such as handles for doors, furniture, fishing rods, knives, canes, golf clubs, shoehorns and other devices, or e.g. as bicycle grips.

Birch bark laminate may provide the object suitable for human actuation with a natural birch-bark appearance. Alternative, cutting edges of birch bark laminates may form the object's surface as follows: For the production of handles, a multitude of laminates according to the invention may be bonded surface to surface in order to form a solid body, as known from DE 10 2008 032 940 B4. This body may be processed, e.g. by mechanically shaping it by means of cutting and/or laser cutting, punching and/or further methods. In this application, the surface to be manually contacted or actuated is typically formed by cutting edges of the laminate and not by the natural birch bark surface. This surface comprises a smooth and pleasant texture. Such handles may be used in the same application as above.

Yet another aspect of the invention is a solid object, in particular a wood panel for the manufacturing of furniture, comprising a base body and the laminate according to the invention which is arranged on the base body and provides at least one surface of the solid object.

In particular, wooden panels can be provided with a laminate according to the invention, wherein the surface of the laminate covers at least parts of the surface of the panel, providing it with a natural birch-bark appearance. Laminates may be fixed with a binder, such as an adhesive or in alternative ways. Solid objects according to the invention may be used in a variety of applications and particularly for design purposes, such as furniture or interior design. Wooden panels may be used for wall, ceiling or floor covering, making use of the water repellent, dirt repellent and durable material properties of the birch bark and its optical appearance.

In general, the solid object may be a dashboard, an article of daily use, a piece of jewelry or clothing, etc.

A further aspect is an object suitable for the arrangement in a humid environment, in particular a shower mat, comprising the laminate according to the invention.

A humid environment is e.g. an indoor environment and/or an environment where the humidity exceeds the ambient humidity at least in time periods, such as a bathroom or damp room. This may be due to the presence of water and/or water vapor being used in said environment.

A shower mat may be produced from the laminate according to the invention, making use of the water and dirt repellent, durable and non-slip material properties that the birch bark has even in a wet state. The shower mat may e.g. be manufactured of two or more layers of the laminate according to the invention bonded to each other or produced by bonding the laminate to a mat or medium of any kind. Besides, damp-room floor covering elements may be produced from the laminate.

Another aspect of the invention is a receptacle suitable for the retention or storage of objects or goods, in particular a container, a bag, a case or a sheath, providing at least one wall delimiting an inner volume of the receptacle from the exterior, wherein at least a section of the is realized by the laminate according to the invention.

A receptacle typically encloses a hollow space or volume into which objects or goods can be inserted. A wall of the receptacle is a part that separates the hollow space or volume from the exterior. Any kind of receptacle or container suitable for the retention of at least one object or an amount of solids, powdery goods or liquids can be manufactured with the laminate according to the invention, making use of different material properties as described.

The term receptacle is not used in the meaning of socket in this context. Retention of an object means that the object is at least partly surrounded by the receptacle. For example bags, handbags, backpacks, wallets, baskets, urns, cans, cases and sheaths, in particular for knives, can be manufactured with the laminate according to the invention.

Another aspect is a surface element, in particular a room divider, seating furniture, divan or couch, comprising a clamping device for the clamping and/ or tensioning of a planar material, wherein the surface element comprises a laminate according to the invention which is clamped under tension by the clamping device.

The clamping device may be any device suitable for the planar clamping, stretching or fixing of the laminate, such as a frame with clamps or at least one bar or stand with fixing elements such as screws, bolts, nails or the like. The clamping device clamps the laminate under tensile stress, which is realized in at least one dimension, so the laminate is stretched out and positioned in a plane in space. The laminate is particularly manufactured in an essentially planar way for this purpose. For example, room dividers may be produced as surface elements, but the surface elements may also act as cover panels or for other purposes. Further, the laminate may be used as a seating surface or bedding or sleeping surface, clamped by preferably a plurality of clamping devices.

The invention is further illustrated and characterized by the following figures that show certain examples from which further embodiments and advantages can be drawn. These figures are meant to illustrate the invention but not to limit its scope.
Figure 1 shows a cross section of a natural laminate, i.e. an untreated piece of birch bark,
Figure 2 shows a cross section of a the same piece after environmental influence,
Figure 3 shows schematic top views of three different laminates according to the invention,
Figure 4 shows a cross section of a laminate according to the invention,
Figure 5 shows a cross section of another laminate according to the invention,
Figure 6 shows a cross section of yet another laminate according to the invention,
Figure 7 schematically shows parts of a method for manufacturing of a laminate according to the invention,
Figure 8 shows an intermediate step during the manufacturing of yet another laminate according to the invention,
Figure 9 shows another intermediate step during the manufacturing of another laminate according to the invention.

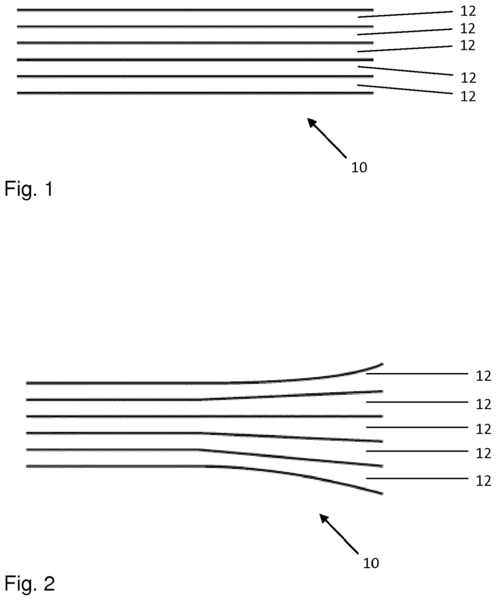

Figure 1 shows a cross section of a natural laminate 10, i.e. a natural piece of birch bark after it has been removed from the trunk. It comprises a plurality of layers 12 which run essentially in parallel. After being exposed to environmental influences such as humidity, pressure, stress and/or other factors over a certain period of time, the layers 12 tend to separate, as shown in Figure 2. This decreases the stability and other properties of the laminate 10 and renders an industrial application impossible.

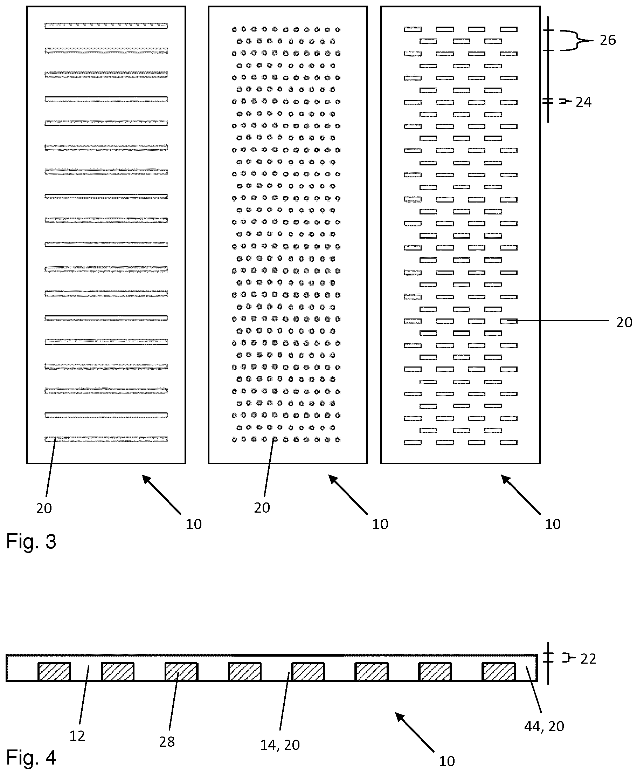

Figure 3 shows schematic views of heat introduction patterns according to the invention. In this example, heat is introduced to the laminates 10 from one side with a laser. The presented resulting zones of heat introduction 20 are shaped and arranged in lines, such as parallel lines, dots or rectangles. The with Wh 24 is the width of the point or line of heat introduction and the width Wr 26 is the width of adjacent material not bonded by introduced heat. Their ratio, Wh/Wr, is approximately Wh/Wr = 1/7.

On and around the edges of the zones of heat introduction 20, an adhesive bond 14 bonds the layers 12 of the laminate 10, as shown in Fig. 4. Here, heat has been introduced from the lower side, being the inner side of the natural birch bark. During heat introduction, recesses 28 have been formed and on the walls of the recesses 28 the heat has penetrated a great part of the laminate 10. The thickness 22 of the remaining material is 0.4 mm. Additionally, the laminate 10 has been cut with a laser resulting in cutting edges 44 representing further zones of heat introduction 20.

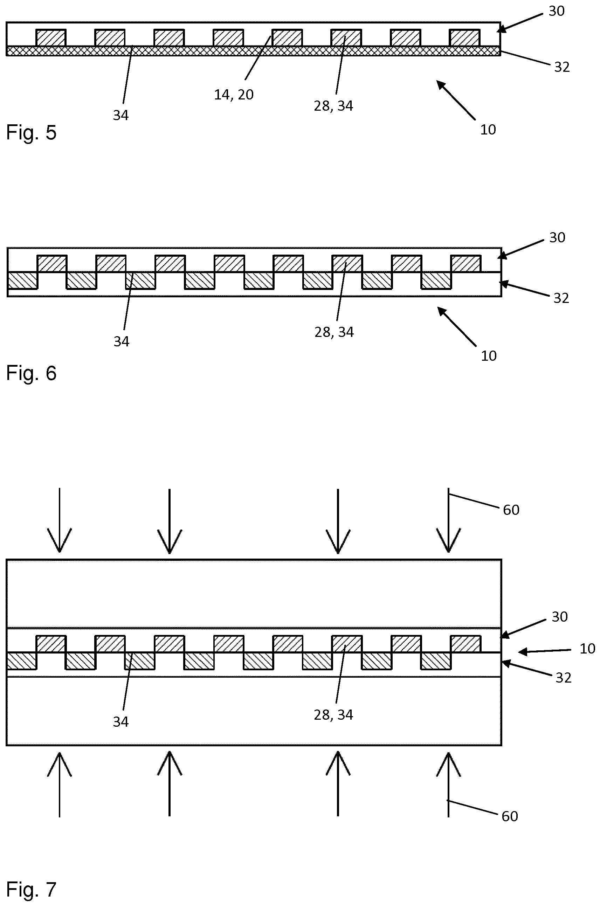

Fig. 5 shows a cross section of a laminate 10 according to the invention which has been manufactured by bonding a first piece of birch bark 30, i.e. a laminate 10 with zones of heat introduction 20, to a body 32. Between the first piece of birch bark 30 and the body 32 a layer of a binder 34 is arranged, which binder 34 also fills the recesses 28 formed by heat introduction. The body 32 is a planar object onto which the first piece of birch bark 30 is bonded in order to serve technical and decorative purposes. The first piece of birch bark 30 is bonded with its side of heat introduction to the body 32 to provide an undisturbed surface which is shown as the upper surface.

Figure 6 shows a cross section of another laminate 10 according to another embodiment of the invention. In this example, the body 32 is another laminate 10 according the invention. Both laminates 10 are bonded together with offset recesses 28 which are directed towards the bonding surface. The resulting laminate 10 has a natural and undisturbed birch bark surface on both sides and is stable and flexible.

Figure 7 shows parts of a method for the manufacturing of a laminate 10 according to the invention in which a first piece of birch bark 30 is bonded to a body 32, realized as a second piece of birch bark, by means of a binder 34. Pressure 60 is exerted to control the bonding process. The contacting surfaces and the recesses 28 are wetted or filled with the binder 34.

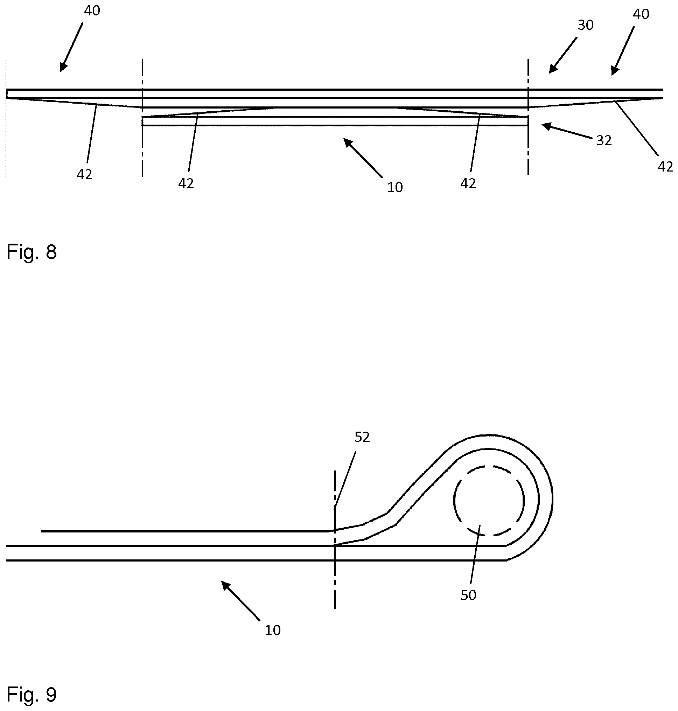

Fig. 8 shows a first piece of birch bark 30 bonded to a body 32, realized as a second piece of birch bark, wherein in peripheral zones 40, the pieces of birch bark 30, 32 are chamfered, leading to oblique areas 42 that are directed to the respective other piece of birch bark 32, 30. The laminate 10 manufactured in the presented way has softer and more convenient peripheral zones 40, e.g. for the use in a tapering of a watch bracelet. Besides, the described procedure can help eliminate sharp edges when bonding two layers of the laminate 10 together, e.g. when bending a laminate around a pin, as shown in Fig. 9.

A pin 50 is positioned on one side of the laminate 10 and the laminate 10 is bent around the pin 50. The overlapping zone is fixed with a seam 52 and may be additionally or alternatively fixed with a binder. If a laminate 10 is desired which does not comprise two layers of birch bark, the edges may be chamfered to obtain a smooth transition from the double-layered overlapping zone to the rest of the laminate 10. The presented steps may typically be performed during the production of watch bracelets.

**List of reference signs**

| | |
|---|---|
| laminate | 10 |
| layer | 12 |
| adhesive bond | 14 |
| zone of heat introduction | 20 |
| thickness of the remaining material | 22 |
| width Wh | 24 |
| width Wr | 26 |
| recess | 28 |
| first piece of birch bark | 30 |
| body | 32 |
| binder | 34 |
| peripheral zone | 40 |
| oblique area | 42 |
| cutting edge | 44 |
| pin | 50 |
| seam | 52 |
| pressure | 60 |

## Claims

1. Laminate (10) from birch bark, comprising a piece of birch bark having a plurality of layers (12), **characterized in that** in at least one area of the birch bark, layers (12) are fixed to each other by adhesive bond (14) generated by heat introduction.

2. Laminate (10) from birch bark according to claim 1, **characterized in that** the birch bark originates from Betula Pubescens or Betula Pendula.

3. Laminate (10) from birch bark according to one of the claims 1 and 2, **characterized in that** the bark layers (12) are fixed to each other by adhesive bond (14) generated by heat introduction in a part of the material thickness, and the thickness (22) of the remaining material is 0.2 to 0.8 mm, in particular 0.3 to 0.5 mm.

4. Method for producing a laminate (10) from birch bark wherein
- a piece of birch bark is provided, comprising a plurality of layers (12),
- heat is introduced into the piece of birch bark in order to increase the bond between at least some of the layers (12).

5. Method for producing a laminate (10) from birch bark according to claim 4, **characterized in that** in the zone of heat introduction (20) the piece of birch bark is heated to a temperature of 200 to 400 °C; in particular 240 to 320 °C.

6. Method for producing a laminate (10) from birch bark according to one of the claims 4 and 5, **characterized in that** heat is introduced by means of a laser.

7. Method for producing a laminate (10) from birch bark according to at least one of the claims 4-6, **characterized in that** the heat partially penetrates the piece of birch bark.

8. Method for producing a laminate (10) from birch bark according to at least one of the claims 4-7, **characterized in that** the heat is applied in dots and/or in lines.

9. Method for producing a laminate (10) from birch bark according to at least one of the claims 4-8, **characterized in that** a first piece of birch bark (30), comprising at least one zone with an adhesive bond (14) between at least some of the layers (12), is bonded to a body (32), particularly to a second piece of birch bark, by means of a binder (34).

10. Method for producing a laminate (10) from birch bark according to claim 9, **characterized in that** at least one peripheral zone (40) of the first piece of birch bark (30) is chamfered, leading to an oblique area (42), wherein during the bonding process the oblique area (42) is directed towards the body (32).

11. Method for producing a laminate (10) from birch bark according to at least one of the claims 4-10, **characterized in that** the laminate (10) is cut and heat is applied to at least one cutting edge (44) to increase the bond between the layers (12).

12. Bracelet, in particular watch bracelet, **characterized in that** it comprises the laminate (10) as claimed in claims 1-3 or manufactured according to at least one of the claims 4-11.

13. Use of the laminate (10) as claimed in claims 1-3 or manufactured according to at least one of the claims 4-11 for the production of a bracelet, in particular a watch bracelet.

14. Object suitable for the arrangement on human or animal skin, **characterized in that** it comprises the laminate (10) as claimed in claims 1-3 or manufactured according to at least one of the claims 4-11.

15. Object suitable for human actuation, particularly manual actuation, **characterized in that** it comprises the laminate (10) as claimed in claims 1-3 or manufactured according to at least one of the claims 4-11.

16. Solid object, in. particular wood panel for the manufacturing of furniture, **characterized in that** it comprises a base body and the laminate (10) as claimed in claims 1-3 or manufactured according to at least one of the claims 4-11 which is arranged on the base body and provides at least one surface of the solid object

17. Object suitable for the arrangement in a humid environment, in particular a shower mat, **characterized in that** it comprises the laminate (10) as claimed in claims 1-3 or manufactured according to at least one of the claims 4-11.

18. Receptacle suitable for the retention of objects or goods, in particular container, bag, case or sheath, providing at least one wall delimiting an inner volume of the receptacle from the exterior, **characterized in that** at least a section of the wall is realized by the laminate (10) as claimed in claims 1-3 or manufactured according to at least one of the claims 4-11.

19. Surface element, in particular room divider, seating furniture, divan or couch, comprising a clamping device for the clamping and/ or tensioning of a planar material, **characterized in that** the surface element comprises a laminate (10) as claimed in claims 1-3 or manufactured according to at least one of the claims 4-11 which is clamped under tension by the clamping device.

## Patentansprüche

1. Laminat (10) aus Birkenrinde, umfassend ein Stück Birkenrinde, das eine Mehrzahl von Schichten (12) aufweist, **dadurch gekennzeichnet, dass** in mindestens einem Bereich der Birkenrinde Schichten (12) durch eine Klebebindung (14) miteinander verbunden sind, die mittels Wärmeeintrag erzeugt wird.

2. Laminat (10) aus Birkenrinde nach Anspruch 1, **dadurch gekennzeichnet, dass** die Birkenrinde von Betula pubescens oder Betula pendula stammt.

3. Laminat (10) aus Birkenrinde nach einem der Ansprüche 1 und 2, **dadurch gekennzeichnet, dass** die Rindenschichten (12) durch eine Klebebindung (14) miteinander verbunden sind, die mittels Wärmeeintrag in einem Teil der Materialdicke erzeugt wird, und die Dicke (22) des verbleibenden Materials 0,2 bis 0,8 mm, insbesondere 0,3 bis 0,5 mm, beträgt.

4. Verfahren zur Herstellung eines Laminats (10) aus Birkenrinde, wobei ein Stück Birkenrinde bereitgestellt wird, das eine Mehrzahl von Schichten (12) umfasst und Wärme in das Stück Birkenrinde eingetragen wird, um die Bindung zwischen mindestens einigen der Schichten (12) zu verstärken.

5. Verfahren zur Herstellung eines Laminats (10) aus Birkenrinde nach Anspruch 4, **dadurch gekennzeichnet, dass** in der Zone des Wärmeeintrags (20) das Stück Birkenrinde auf eine Temperatur von 200 bis 400 °C, insbesondere 240 bis 320 °C, erhitzt wird.

6. Verfahren zur Herstellung eines Laminats (10) aus Birkenrinde nach einem der Ansprüche 4 und 5, **dadurch gekennzeichnet, dass** die Wärme mit Hilfe eines Lasers eingetragen wird.

7. Verfahren zur Herstellung eines Laminats (10) aus Birkenrinde nach mindestens einem der Ansprüche 4-6, **dadurch gekennzeichnet, dass** die Wärme das Stück Birkenrinde teilweise durchdringt.

8. Verfahren zur Herstellung eines Laminats (10) aus Birkenrinde nach mindestens einem der Ansprüche 4-7, **dadurch gekennzeichnet, dass** die Wärme punktförmig und/oder linienförmig aufgebracht wird.

9. Verfahren zur Herstellung eines Laminats (10) aus Birkenrinde nach mindestens einem der Ansprüche 4-8, **dadurch gekennzeichnet, dass** ein erstes Stück Birkenrinde (30), das mindestens eine Zone mit einer Klebebindung (14) zwischen mindestens einigen der Schichten (12) umfasst, mit Hilfe eines Bindemittels (34) mit einem Körper (32), insbesondere mit einem zweiten Stück Birkenrinde, verbunden wird.

10. Verfahren zur Herstellung eines Laminats (10) aus Birkenrinde nach Anspruch 9, **dadurch gekennzeichnet, dass** mindestens eine periphere Zone (40) des ersten Stücks Birkenrinde (30) abgeschrägt ist, was zu einem schrägen Bereich (42) führt, wobei der schräge Bereich (42) während des Bindungsprozesses dem Körper (32) zugewandt ist.

11. Verfahren zur Herstellung eines Laminats (10) aus Birkenrinde nach mindestens einem der Ansprüche 4-10, **dadurch gekennzeichnet, dass** das Laminat (10) geschnitten wird und Wärme auf mindestens eine Schnittkante (44) aufgebracht wird, um die Bindung zwischen den Schichten (12) zu verstärken.

12. Armband, insbesondere Uhrenarmband, **dadurch gekennzeichnet, dass** es das Laminat (10) nach den Ansprüchen 1-3 umfasst oder nach mindestens einem der Ansprüche 4-11 gefertigt wurde.

13. Verwendung des Laminats (10) nach den Ansprüchen 1-3 oder gefertigt nach mindestens einem der Ansprüche 4-11 zur Herstellung eines Armbands, insbesondere eines Uhrenarmbands.

14. Objekt, geeignet zur Anordnung auf menschlicher oder tierischer Haut, **dadurch gekennzeichnet, dass** es das Laminat (10) nach den Ansprüchen 1-3 oder gefertigt nach mindestens einem der Ansprüche 4-11 umfasst.

15. Objekt, geeignet zur Verwendung durch Menschen, insbesondere händischer Verwendung, **dadurch gekennzeichnet, dass** es das Laminat (10) nach den Ansprüchen 1-3 oder gefertigt nach mindestens einem der Ansprüche 4-11 umfasst.

16. Massives Objekt, insbesondere Holzplatte zur Herstellung von Möbeln, **dadurch gekennzeichnet, dass** es einen Grundkörper und das Laminat (10) nach den Ansprüchen 1-3 oder gefertigt nach mindestens einem der Ansprüche 4-11, das auf dem Grundkörper angeordnet ist und mindestens eine Oberfläche des massiven Objektes bereitstellt, umfasst.

17. Objekt, geeignet zur Anordnung in einer feuchten Umgebung, insbesondere eine Duschmatte, **dadurch gekennzeichnet, dass** es das Laminat (10) nach den Ansprüchen 1-3 oder gefertigt nach mindestens einem der Ansprüche 4-11 umfasst.

18. Behältnis, geeignet zur Aufbewahrung von Objekten oder Gegenständen, insbesondere ein(e) Behälter, Tasche, Etui oder Hülle, der/die mindestens eine Wand bereitstellt, die ein inneres Volumen des Behältnisses von außen begrenzt, **dadurch gekennzeichnet, dass** mindestens ein Abschnitt der Wand durch das Laminat (10) nach den Ansprüchen 1-3 oder gefertigt nach mindestens einem der Ansprüche 4-11 gebildet ist

19. Oberflächenelement, insbesondere Raumteiler, Sitzmöbel, Diwan oder Couch, umfassend eine Klemmvorrichtung zum Festklemmen und/oder Spannen eines flächigen Materials, **dadurch gekennzeichnet, dass** das Oberflächenelement ein Laminat (10) nach den Ansprüchen 1-3 oder gefertigt nach mindestens einem der Ansprüche 4-11 umfasst, das unter Spannung durch die Klemmvorrichtung festgeklemmt ist.

## Revendications

1. Stratifié (10) à partir d'écorce de bouleau, comprenant un morceau d'écorce de bouleau ayant une pluralité de couches (12), **caractérisé en ce que**, dans au moins une zone de l'écorce de bouleau, des couches (12) sont fixées les unes aux autres par une liaison adhésive (14) générée par introduction de chaleur.

2. Stratifié (10) à partir d'écorce de bouleau selon la revendication 1, **caractérisé en ce que** l'écorce de bouleau provient de Betula pubescens ou Betula pendula.

3. Stratifié (1) à partir d'écorce de bouleau selon l'une des revendications 1 et 2, **caractérisé en ce que** les couches d'écorce (12) sont fixées les unes aux autres par une liaison adhésive (14) générée par introduction de chaleur dans une partie de l'épaisseur de matériau, et **en ce que** l'épaisseur (22) du matériau restant est de 0,2 à 0,8 mm, en particulier de 0,3 à 0,5 mm.

4. Procédé pour produire un stratifié (10) à partir d'écorce de bouleau,
- un morceau d'écorce de bouleau étant fourni, comprenant une pluralité de couches (12),
- de la chaleur étant introduite dans le morceau d'écorce de bouleau afin de renforcer la liaison entre au moins certaines des couches (12).

5. Procédé pour produire un stratifié (10) à partir d'écorce de bouleau selon la revendication 4, **caractérisé en ce que**, dans la zone de l'introduction de chaleur (20), le morceau d'écorce de bouleau est chauffé à une température de 200 à 400 °C ; en particulier de 240 à 320 °C.

6. Procédé pour produire un stratifié (10) à partir d'écorce de bouleau selon l'une des revendications 4 et 5, **caractérisé en ce que** la chaleur est introduite au moyen d'un laser.

7. Procédé pour produire un stratifié (10) à partir d'écorce de bouleau selon au moins l'une des revendications 4-6, **caractérisé en ce que** la chaleur pénètre partiellement dans le morceau d'écorce de bouleau.

8. Procédé pour produire un stratifié (10) à partir d'écorce de bouleau selon au moins l'une des revendications 4-7, **caractérisé en ce que** la chaleur est appliquée par points et/ou par lignes.

9. Procédé pour produire un stratifié (10) à partir d'écorce de bouleau selon au moins l'une des revendications 4-8, **caractérisé en ce qu'**un premier morceau d'écorce de bouleau (30), comprenant au moins une zone avec une liaison adhésive (14) entre au moins certaines des couches (12) est lié à un corps (32), en particulier à un deuxième morceau d'écorce de bouleau, au moyen d'un liant (34).

10. Procédé pour produire un stratifié (10) à partir d'écorce de bouleau selon la revendication 9, **caractérisé en ce qu'**au moins une zone périphérique (40) du premier morceau d'écorce de bouleau (30) est chanfreinée, conduisant à une zone oblique (42), la zone oblique (42) étant dirigée vers le corps (32) pendant le processus de liaison.

11. Procédé pour produire un stratifié (10) à partir d'écorce de bouleau selon au moins l'une des revendications 4-10, **caractérisé en ce que** le stratifié (10) est coupé, et **en ce que** de la chaleur est appliquée à au moins une arête de coupe (44) pour renforcer la liaison entre les couches (12).

12. Bracelet, en particulier bracelet de montre, **caractérisé en ce qu'**il comprend le stratifié (10) selon les revendications 1-3 ou fabriqué selon au moins l'une des revendications 4-11.

13. Utilisation du stratifié (10) selon les revendications 1-3, ou fabriqué selon au moins l'une des revendications 4-11 pour la production d'un bracelet, en particulier d'un bracelet de montre.

14. Objet approprié pour la disposition sur la peau humaine ou animale, **caractérisé en ce qu'**il comprend le stratifié (10) selon les revendications 1-3 ou fabriqué selon au moins l'une des revendications 4-11.

15. Objet approprié pour l'actionnement humain, en particulier l'actionnement manuel, **caractérisé en ce qu'**il comprend le stratifié (10) selon les revendications 1-3 ou fabriqué selon au moins l'une des revendications 4-11.

16. Objet solide, en particulier panneau de bois pour la fabrication de meubles, **caractérisé en ce qu'**il comprend un corps de base et le stratifié (10) selon les revendications 1-3 ou fabriqué selon au moins l'une des revendications 4-11, lequel est disposé sur le corps de base et fournit au moins une surface de l'objet solide.

17. Objet approprié pour la disposition dans un environnement humide, en particulier un tapis de douche, **caractérisé en ce qu'**il comprend le stratifié (10) selon les revendications 1-3 ou fabriqué selon au moins l'une des revendications 4-11.

18. Réceptacle approprié pour la conservation d'objets ou d'articles, en particulier conteneur, sac, boîte ou fourreau, fournissant au moins une paroi délimitant un volume intérieur du réceptacle à partir de l'extérieur, **caractérisé en ce qu'**au moins une section de la paroi est réalisée par le stratifié (10) selon les revendications 1-3 ou fabriqué selon au moins l'une des revendications 4-11.

19. Élément de surface, en particulier cloison de séparation, siège, divan ou sofa, comprenant un dispositif de serrage pour le serrage et/ou la tension d'un matériau planaire, **caractérisé en ce que** l'élément de surface comprend un stratifié (10) selon les revendications 1-3 ou fabriqué selon au moins l'une des revendications 4-11, lequel est serré sous tension par le dispositif de serrage.
